# EUROPEAN PATENT APPLICATION

(11) **EP 0 921 091 A2**
(43) Date of publication of application: **09.06.1999**
(21) Application number: 98123011.3
(22) Date of filing: 04.12.1998
(51) Int. Cl.: B66C 23/70

(54) **Smart tele-cylinder**

(30) Priority: 05.12.1997 US 67815 P; 10.12.1997 US 69055 P
(71) Applicant: Grove U.S. LLC, Shady Grove, Pennsylvania 17256 (US)
(72) Inventor: BANKS, William W., New market, Maryland 21774 (US); ECKSTINE, Dennis W., Waynesboro, Pennsylvania 17268 (US); FLEAGLE, Jon E., Waynesboro, Pennsylvania 17268 (US); BONESTEEL, Oliver P., Greencastle, Pennsylvania 17225 (US); EYLER, Francis R., Hanover, Pennsylvania 17331 (US)
(74) Representative: Schwabe - Sandmair - Marx

(57) **Abstract**

In the smart tele-cylinder (100) according to the present invention, a non-contact distance measuring device (105) is used to determine the position of the piston head (125) in the tele-cylinder (100). Knowing this position gives an accurate measurement of the tele-cylinder's length. Accordingly, based on the measurement from the non-contact distance measuring device (105), a controller (150) determines, via a lookup table or equation, a desired distance of an element associated with the tele-cylinder (100).

## Description

### BACKGROUND OF THE INVENTION

### 1. Field of the Invention

The present invention relates to a tele-cylinder.

### 2. Description of Related Art

Cranes and aerial work platforms use many devices to detect the distance to, the length of and/or the position of an element, such as a boom, forming a portion of the crane or aerial work platform. These devices rely on contact between the device and a portion of the element having its position and/or length detected. Devices which rely on contact, however, have a limited life span because each physical contact serves to wear and degrade the device. Contact devices also fail because of external factors which prohibit the detection of contact. For instance, most contact devices use electrical switches, and ice and freezing rain can prevent such switches from functioning.

Furthermore, most contact devices only provide a discrete measurement. When contact occurs, this contact indicates that, for example, the boom is at a predetermined position or at a predetermined length. Such contact devices can not supply a continuously varying real-time measurement. Contact devices also have slow response times. The boom will no longer be in the predetermined position by the time the detected contact is processed. Accordingly, contact devices include a certain amount of error.

### SUMMARY OF THE INVENTION

In the tele-cylinder having a cylinder and piston according to the present invention, a transmitter and receiver of a non-contact distance measuring device are mounted in the cylinder. The receiver receives electromagnetic energy transmitted by the transmitter and reflected from a head of the piston. The non-contact distance measuring device measures the time period between transmission and reception of the electromagnetic energy. This time period gives the distance between the piston head and the receiver of the non-contact measuring device, and this distance correlates to the position of the piston, and therefore, the length of the tele-cylinder. Based on the measurement from the non-contact distance measuring device, a controller determines a desired distance of an element associated with a tele-cylinder.

For instance, if the smart tele-cylinder according to the present invention is the extension mechanism of a boom or boom section, the controller determines, via a lookup table or equation, the length of the associated boom or boom section.

Alternatively, instead of outputting the distance measurement, the non-contact measuring device could output the time period between transmission and reception of the electromagnetic energy, and the controller could determine the desired distance based thereon.

Because distance measurements are made without relying on physical contact, the smart tele-cylinder according to the present invention does not suffer from the various problems and disadvantages noted above with respect to conventional contact based devices.

Other objects, features, and characteristics of the present invention; methods, operation, and functions of the related elements of the structure; combination of parts; and economies of manufacture will become apparent from the following detailed description of the preferred embodiments and accompanying drawings, all of which form a part of this specification, wherein like reference numerals designate corresponding parts in the various figures.

### BRIEF DESCRIPTION OF THE DRAWINGS

The present invention will become more fully understood from the detailed description given hereinbelow and the accompanying drawing which is given by way of illustration only, and thus are not limitative of the present invention, and wherein:

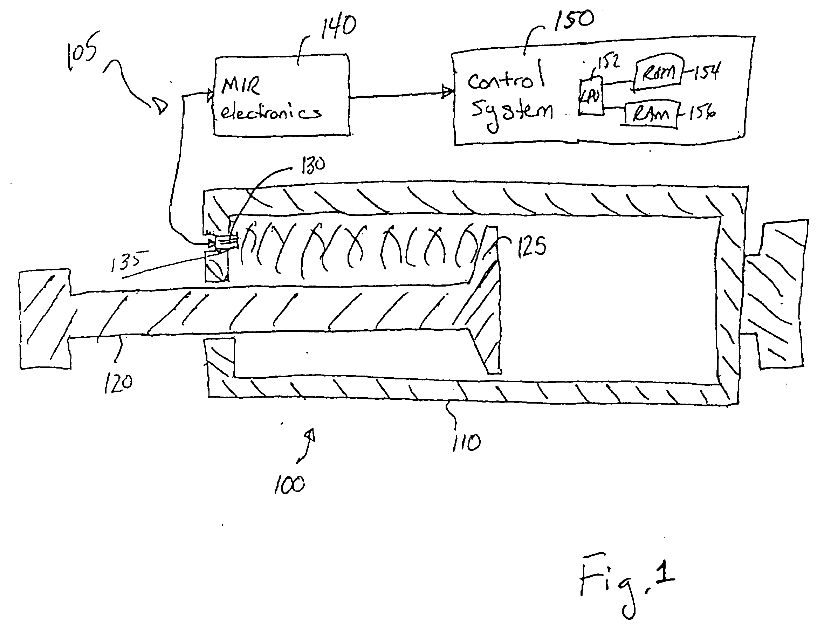

Fig. 1 illustrates an embodiment of a smart cylinder according to the present invention.

### DETAILED DESCRIPTION OF THE PREFERRED EMBODIMENTS

Fig. 1 illustrates an embodiment of a smart cylinder 100 according to the present invention. As shown, the smart cylinder in this embodiment is a hydraulic tele-cylinder including a cylinder 110 having a piston 120 disposed therein. The transmitting and receiving antennas 130 of an MIR system 105 are mounted at one end and inside the cylinder 110. Preferably, the antennas 130 are mounted in a threaded screw 135 which screws into the end of the cylinder 110.

The pulses (electromagnetic energy) emitted by the transmitting antenna 130 travel longitudinally along the cylinder 110 because the inner wall of the cylinder 110 and the piston 120 serve as a waveguide. The pulses reflect back from the piston head 125 of the piston 120, and the reflected pulses are received by the receiving antenna 130. The MIR electronics 140 of the MIR system 105 receive the reflected pulses, and determine the distance from the antennas 130 to the piston head 125.

The MIR electronics 140 output this distance measurement to a control system 150. The control system 150 includes a processor 152 connected to a ROM 154 and a RAM 156. The control system 150 includes a look up table, stored in either the ROM 154 or the RAM 156, which converts the distance measurement into a desired distance measurement of an element associated with the smart cylinder 100. For instance, if the smart cylinder 100 served as the telescoping cylinder to extend a boom section, the look up table converts the distance measurement from the MIR electronics 140 into an extension length of the boom section (i.e., the desired distance measurement). Because the contents of the look-up table depend on the desired distance measurement and the contents are readily determined by one skilled in the art, the look-up table will not be discussed in detail.

Instead of supplying a distance measurement, the MIR electronics 140 can be configured to supply the time delay between transmission and reception of pulses. In this alternative embodiment, the control system 150 stores a look-up table which converts the time delay into the desired distance measurement.

In another alternate embodiment, instead of a look-up table, the control system 150 stores an equation for converting the distance measurement or time delay from the MIR electronics 140 into a desired distance measurement.

As a further alternative, the MIR electronics 140 store the look-up table or equation, and convert the time delay or distance measurement into the desired distance measurement.

Instead of the MIR system 105, any device which measures the distance to a body without relying on contact such as sonic, ultra-sonic, infra-red and laser distance measuring devices, may be used.

The invention being thus described, it will be obvious that the same may be varied in many ways. Such variations are not to be regarded as a departure from the spirit and scope of the invention, and all such modifications as would be obvious to one skilled in the art are intended to be included within the scope of the invention.

## Claims

1. A smart tele-cylinder, comprising:
a cylinder (110) having a first and second end;
a piston (120) having a piston head (125) mounted in the cylinder (110), the piston head (125) moving from the first end to the second end when the piston (120) retracts and moving from the second end to the first end when the piston (120) extends;
a non-contact measuring device (105) at least partially mounted in the cylinder (110) and measuring a distance to the piston head (125); and
a controller (150) determining a desired distance of an element associated with the tele-cylinder based on the measured distance.

2. The device of claim 1, wherein the non-contact distance measuring device (105) is a micro-impulse radar.

3. The device of claim 1, wherein the non-contact distance measuring device (105) is a sonic distance measuring device.

4. The device of claim 1, wherein the non-contact distance measuring device (105) is an ultrasonic distance measuring device.

5. The device of claim 1, wherein the non-contact distance measuring device (105) is an infra-red distance measuring device.

6. The device of claim 1, wherein the non-contact distance measuring device (105) is a laser distance measuring device.

7. The smart tele-cylinder of claim 1, wherein the non-contact measuring device (105) comprises:
a transmitter (130) mounted in the first end and transmitting electromagnetic energy; and
a receiver (130) mounted in the first end and receiving the electromagnetic energy reflected from the piston head (125).

8. The smart tele-cylinder of claim 1, wherein the controller (150) determines the desired distance from a look-up table stored therein based on the measured distance.

9. The smart tele-cylinder of claim 1, wherein the controller (150) determines the desired distance by calculating the desired distance using the measured distance.

10. The smart tele-cylinder of claim 1, wherein the element associated with the tele-cylinder is one of a boom and a boom section.

11. A smart tele-cylinder, comprising:
a cylinder (110) having a first and second end;
a piston having a piston head (125) mounted in the cylinder (110), the piston head (125) moving from the first end to the second end when the piston (120) retracts and moving from the second end to the first end when the piston (120) extends;
a non-contact measuring device (105) including a transmitter (130) and a receiver (130) mounted in the cylinder (110), the transmitter (130) transmitting electromagnetic energy, the receiver (130) receiving the electromagnetic energy reflected from the piston head (125), and the non-contact measuring device (105) measuring a time period between transmission of the electromagnetic energy and reception of the reflected electromagnetic energy; and
a controller (150) determining a desired distance of an element associated with the tele-cylinder based on the measured time period.

12. The device of claim 11, wherein the non-contact measuring device (105) is a micro-impulse radar.

13. The device of claim 11, wherein the non-contact measuring device (105) is a sonic measuring device.

14. The device of claim 11, wherein the non-contact measuring device (105) is an ultrasonic measuring device.

15. The device of claim 11, wherein the non-contact measuring device (105) is an infrared measuring device.

16. The device of claim 11, wherein the non-contact measuring device (105) is a laser measuring device.

17. The smart tele-cylinder of claim 11, wherein the transmitter (130) and the receiver (130) are mounted in the first end.

18. The smart tele-cylinder of claim 11, wherein the controller (150) determines the desired distance from a look-up table stored therein based on the measured time period.

19. The smart tele-cylinder of claim 11, wherein the controller (150) determines the desired distance by calculating the desired distance using the measured time period.

20. The smart tele-cylinder of claim 11, wherein the element associated with the tele-cylinder is one of a boom and a boom section.
